# NEUE EUROPÄISCHE PATENTSCHRIFT

(11) **EP 1 956 346 B2**
(45) Veröffentlichungstag und Bekanntmachung des Hinweises auf die Entscheidung über den Einspruch: **04.11.2015**
(45) Hinweis auf die Patenterteilung: 25.04.2012
(21) Anmeldenummer: 08101258.5
(22) Anmeldetag: 04.02.2008
(51) Int. Cl.: E06B 9/88, G01D 13/00, G01D 5/14, H02K 7/116

(54) **Vorrichtung zur Stillstandssteuerung einer motorischen Antriebseinrichtung**
Device for controlling the standstill state of a motorised drive mechanism
Dispositif de commande à l'arrêt d'un dispositif d'entraînement motorisé

(30) Priorität: 05.02.2007 DE 102007006396
(43) Veröffentlichungstag der Anmeldung: 13.08.2008
(73) Patentinhaber: Lott GmbH, 63584 Gründau (DE)
(72) Erfinder: Lott, Oswald, D-63584, Gruendau (DE)
(74) Vertreter: Staudt, Armin Walter

(56) Entgegenhaltungen:
- EP-A2- 1 319 795
- DE-A1- 4 230 729
- DE-A1- 4 230 729
- DE-A1- 19 519 020
- DE-A1- 19 706 209
- DE-A1-102004 041 293
- DE-C1- 19 617 740
- DE-C1- 19 617 740
- DE-T2- 69 714 619
- JP-A- 6 194 238
- JP-A- 58 109 834
- US-A- 2 498 282
- US-A- 4 150 566
- JP H06194238 (ABSTRACT)
- JP S58109834 (TRAN)
- JP S58109834 (ABSTRACT)
- Kopie aus http://de.wikipedia.org/wiki/Zahnrad
- Kopie aus http://de.wikipedia.org/wiki/Getriebe
- Kopie aus http://de.wikipedia.org/wiki/Hall-Sensor

## Beschreibung

Die Erfindung betrifft eine Vorrichtung zur Stillstandssteuerung einer motorischen Antriebseinrichtung eines Rolladens, einer Markise, eines Garagentors und dergleichen, mit einer Wickelwelle, die über eine Getriebekupplung mit einer Antriebswelle eines Elektromotors unter Belassung eines mechanischen Spiels verbunden ist, mit mindestens einem Sensor zum Erfassen eines Abschaltkriteriums sowie mit einer Auswerte- und Steuereinrichtung, mittels der die Stromversorgung für den Elektromotor in Abhängigkeit von Ausgangssignalen des Sensors schaltbar ist, wobei die Getriebekupplung ein erstes Zahnrad umfasst, das mit der Wickelwelle dreht und das - unter Belassung des mechanischen Spiels - unmittelbar oder mittelbar im Eingriff mit einem zweiten Zahnrad steht, das mit der Antriebswelle dreht.

### Stand der Technik

Auf- und abwickelbare Behänge, wie Rollläden, Markisen, Sonnenblenden, Rolltore und dergleichen dienen zum Verschließen von Fenster-, Tür- oder Toröffnungen. Sie sind mit Aufwickel- oder Raffeinrichtungen ausgestattet, die im Zuge der Automatisierung zunehmend elektrisch betrieben werden. Die elektrische Steuerung schaltet den elektrischen Antrieb automatisch ab, sobald der Behang seine physikalisch vorgegebene oder sonst vorgegebene Endposition erreicht hat. Für eine automatische Abschaltung an den jeweiligen Endpositionen sind eine Vielzahl von Varianten bekannt. Moderne Vorrichtungen sind mit einem Positionsgeber zur Erfassung der aktuellen Position des Behangs (Rollladenpanzers und dergleichen) ausgestattet. Hierzu werden bei der Auf- und Abbewegung Impulse erfasst und in einer Zähleinrichtung je nach Zählrichtung aufwärts oder abwärts gezählt.

In der Regel erfordern Antriebe und Steuerungen zum Verfahren des Behanges aus Sicherheitsgründen auch einen Auflaufschutz. Hierzu sind Sensoren beziehungsweise Schaltelemente vorgesehen, die das Auflaufen des Behanges auf ein Hindernis erkennen, und gegebenenfalls den Antrieb zur Drehung der Welle stillsetzen oder die Drehrichtung des elektrischen Antriebes und damit der Welle umkehren.

Mehrere Ausführungsformen eines derartigen Auflaufschutzes sind in der DE 44 40 449 C2 beschrieben. So wird etwa vorgeschlagen, die Überschreitung eines Grenzwerts für das Motor-Drehmoment oder einer vorgegebenen Änderung des Drehmoments als Abschaltkriterium für den Motor zu verwenden. Das Drehmoment wird erfasst, indem die Phasenverschiebung des durch die beiden Phasenwicklungen des Elektromotors fließenden Stroms ausgewertet wird. Außerdem wird vorgeschlagen, die Drehzahl der über eine Getriebekupplung mit dem Motor in Verbindung stehenden Wickelwelle zum Auf- und Abwickeln des Rollladens zu erfassen und bei Unterschreitung einer vorgegebenen Mindestdrehzahl den Motor abzuschalten. Zur Erfassung der Wickelwellen-Drehzahl dienen ein 16-poliger Ringmagnet auf einem Mitnahmering um die Wickelwelle und ein Hall-Sensor, der die Pausenzeit zwischen den Impulsen und damit die Drehzahl erfasst. Sinkt die Drehzahl auf einen Wert unter 90 % der in der Steuerung gespeicherten Nenndrehzahl, wird der Motor abgeschaltet.

Ergänzend wird vorgeschlagen, zwischen der Wickelwelle und der Antriebswelle des Motors ein mechanisches Spiel einzubauen, wodurch die Antriebswelle trotz aufgelaufener und stehender Wickelwelle um das Spiel weiter drehbar ist. Hierzu ist eine Getriebekupplung in Form eines Rings mit einer Innenbohrung mit rechteckigem Querschnitt vorgesehen. In diese Innenbohrung erstreckt sich die Motorantriebswelle, die eine trapezförmige Außenkontur aufweist, so dass sie im Bereich von 20 Grad bis 40 Grad in der Innenbohrung frei drehbar ist. Stößt der Behang beider Abwärtsbewegung auf ein Hindernis, so kommt die Drehung der Wickelwelle zum Stillstand, was mittels des Hall-Sensors erfasst wird. Aufgrund des mechanischen Spiels zwischen Wickelwelle und Motorantrieb kann sich der Motor noch ein Stück drehen. Der Unterschied der Rotationszustände von Motor und Wickelwelle (also Drehung des Motors bei gleichzeitigem Stillstand der Wickelwelle) werden mittels der Auswerte- und Steuereinrichtung erkannt und als zusätzliches Abschaltkriterium zum Abschalten des Motor ausgewertet.

Es hat sich jedoch gezeigt, dass diese Art des Auflaufschutzes steuerungstechnisch schwierig zu erfassen ist und auch nur in Verbindung mit der Messung des Drehmoments des Motors zu verlässlichen Ergebnissen führt. Eine Drehmomentmessung erfordert jedoch eine aufwändige Messtechnik.

Eine Vorrichtung zur Endabschaltung einer motorischen Antriebseinrichtung für die Wickelwelle eines Rollladens gemäß der eingangs genannten Gattung ist aus der DE 197 06 209 A1 bekannt. Diese weist einen Sensor zur Erfassung von Drehmomentänderungen auf, die infolge von Lastwechselvorgängen auf die Wickelwelle einwirken. Der Sensor ist als mechanisches Schaltelement aus zwei zusammenwirkenden Bauteilen ausgebildet, von denen ein mit der Wickelwelle verbundenes drehfest verbundenes Gehäuseteil und das andere als ein innerhalb des Gehäuseteils unter Belassung eines mechanischen Spiels drehbar gelagerten und mit der Antriebseinrichtung drehfest verbundenes Schaltelements ausgebildet ist. Beim Auflaufen des Rollladenpanzers auf ein Hindernis verdrehen sich die Bauteile gegen eine Druckfeder gegenseitig solange, bis das Schaltelement in einer vorgegebenen Winkellage gegen einen Anschlag gelangt. Dies ist in einer Steuereinrichtung als Abschaltkriterium für den Rollladenantrieb definiert, so dass der Elektromotor abgeschaltet wird.

Aus dem Abstract zur JP 06-19423 A ergibt sich ein Getriebe, bei dem ein erstes Rotationsbauteil innerhalb eines zweiten Rotationsbauteils rotierbar gelagert ist und gleichzeitig mit diesem über elastisch verformbare Zwischenkörper in Wirkverbindung steht. Beide Rotationsbauteile sind um dieselbe Rotationsachse rotierbar, wobei der Winkel der Verdrehung des ersten Rotationsbauteils gegenüber dem zweiten gegen die Kraft der elastisch verformbaren Zwischenkörper erfolgt. Der Verformungsgrad wird mittels Sensoren erfasst und daraus das wirksame Drehmoment ermittelt.

### Technische Aufgabenstellung

Der Erfindung liegt daher die Aufgabe zugrunde, eine konstruktiv einfache und hinsichtlich Reproduzierbarkeit und Verlässlichkeit des Auflaufschutzes verbesserte Vorrichtung zur Stillstandssteuerung einer motorischen Antriebseinrichtung bereit zu stellen, die ohne Drehmomentmessung auskommt.

Diese Aufgabe wird ausgehend von einer Vorrichtung der eingangs genannten Gattung erfindungsgemäß dadurch gelöst, dass dass der mindestens eine Sensor als Hall-Sensor ausgebildet ist, und dass das erste Zahnrad als erster Inkrementalring ausgebildet ist, der gleichmäßig um eine erste Drehachse verteilte erste Signalgeber aufweist, die zur Abgabe von periodischen und mit der Drehbewegung des ersten Zahnrades korrelierten signalen geeignet sind, und wobei das zweite Zahnrad als zweiter Inkrementalring ausgebildet ist, der gleichmäßig um eine zweite Drehachse verteilte zweite Signalgeber aufweist, die zur Abgabe von periodischen und mit der Drehbewegung des zweiten Zahnrades korrelierten Signalen geeignet sind, und wobei mittels des mindestens einen Hall-Sensors eine relative Änderung der örtlichen Position oder der zeitlichen Abfolge der Signale von ersten und zweiten Signalgebern erfassbar ist, und wobei die ersten Signalgeber gleichzeitig als Inkrementalgeber zur Steuerung der Auf- und Abbewegung eines Behangs dienen, so dass mittels einer Zähleinrichtung obere und untere Endlage und Zwischenpositionen des Behangs erfassbar sind und dieselbe Auswerte- und Steuereinrichtung gleichzeitig für die Stillstandssteuerung und für eine Positionssteuerung und Endlagenabschaltung des Behangs einsetzbar ist.

Wie bei der oben beschriebenen bekannten Vorrichtung, sind auch bei der erfindungsgemäßen Vorrichtung Wickelwelle und Motorwelle mechanisch schlüssig, aber unter Belassung eines gewissen Spiels, miteinander verbunden. Das mechanische Spiel ist dabei so ausgelegt, dass bei der Abwärtsbewegung des Behangs und einem durch Hindernis oder Erreichen der Endlage bewirkten Stopps der Wickelwellen-Rotation die Motorwelle noch frei rotieren kann, und zwar entsprechend dem vom Spiel zugelassenen Winkel. In dem Umfang können sich Wickelwelle und Motorwelle gegeneinander verdrehen. Die relative Verdrehung wird von der Auswerte- und Steuereinrichtung als Veränderung der relativen Rotationsstellung von Motorwelle zu Wickelwelle (beziehungsweise der damit verbundenen Bauteile oder Zahnräder) erfasst, und sie dient als Kriterium zum Abschalten des Motors oder zum Umkehren der Drehrichtung. Das Eintreten des "Abschaltkriteriums" in diesem Sinne kann demnach zu einem Abschalten des Motors oder zur Umkehr seiner Bewegungsrichtung führen. Die Erfassung der Veränderung der relativen Rotationsstellungen von Motorwelle und Wickelwelle im Rahmen des vorgegebenen mechanischen Spiels ist messtechnisch einfach zu realisieren und erfordert keinerlei Messung eines Drehmoments, wie im Folgenden noch näher erläutert wird.

Das mechanische Spiel zwischen Wickelwelle und Antriebswelle wird durch die Getriebekupplung verwirklicht, und zwar durch ein Ineinandergreifen zweier Zahnräder oder durch ein Ineinandergreifen zweier mit den Zahnrädern in Wirkverbindung stehender und drehender Bauteile, und von denen das eine der Wickelwelle und dass andere der Motorantriebswelle zuzuordnen ist. Auch wenn im Folgenden der Einfachheit halber nur noch Zahnräder angesprochen werden, sollen damit auch mit den Zahnrädern in Wirkverbindung stehende und drehende Bauteile verstanden werden. Das Ineinandergreifen erfolgt durch eine Verzahnung, bei der um einen Hüllkreis gleichmäßig verteilte Ausformungen des einen Zahnrades in Ausnehmungen des anderen Zahnrades eingreifen. Durch die Geometrie der Verzahnung ergibt sich ein genau reproduzierbares Spiel in der Rotationsstellung der Zahnräder zueinander, und es erlaubt insbesondere auch die Einrichtung größerer Drehwinkel. Der maximale Drehwinkel des mechanischen Spiels ist durch die Verzahnung exakt einstellbar; Verkantungen, Verklemmungen und merkliche Änderungen durch Materialverschleiß sind nahezu ausgeschlossen.

Das Gewicht des Behangs trägt dazu bei, dass sowohl bei der Aufwärtsbewegung als auch bei Abwärtsbewegung stets dieselben belasteten - Seiten der Verzahnung formschlüssig aneinander liegen. Im Normalbetrieb ist das Entstehen eines versehentlichen Versatzes der Rotationsstellung von Wickelwelle und Antriebswelle daher aufgeschlossen.

Weiterhin ist bei der erfindungsgemäßen Vorrichtung vorgesehen, dass sowohl die Drehbewegung der Wickelwelle als auch die der Antriebswelle jeweils anhand mindestens eines mitdrehenden Signalgebers ermittelbar ist, der den betreffenden Zahnrädern oder Bauteilen zugeordnet ist. Hierzu ist der mindestens eine Signalgeber entweder direkt an dem jeweiligen Zahnrad vorgesehen oder an dem mit diesem verbundenen oder drehenden Bauteil. Dies ermöglicht eine parallele Erfassung gleichartiger (mechanischer, optischer, elektrischer oder magnetischer) Signale und einen unmittelbaren Vergleich miteinander oder mit im Datenspeicher abgelegter Daten, so dass sich Unterschiede im zeitlichen Ablauf oder Abweichungen in der Rotationsstellung unmittelbar ergeben. Wesentlich ist, dass die jeweiligen Signalgeber infolge der Drehbewegung von Wickelwelle und Antriebswelle periodisch - und vorzugsweise mit beiderseits gleicher Frequenz - Signale erzeugen, die vom feststehenden Sensor oder von den Sensoren erfasst werden können.

Der Grundgedanke der Erfindung beruht somit darauf, relative Bewegungen miteinander verbundener Getriebeteile des elektrischen Antriebs in einem vorgegebenen Rahmen (mechanisches Spiel) zu ermöglichen, diese zu erfassen, und das Erreichen einer Relativbewegung, die dem vorgegebenen mechanischen Spiel entspricht, als Abschaltkriterium für die elektrische Antriebeseinrichtung des Behangs auszuwerten.

Dadurch, dass dieselbe Auswerte- und Steuereinrichtung gleichzeitig für die Stillstandssteuerung und für eine Positionssteuerung und Endlagenabschaltung des Behangs einsetzbar ist, wird eine einfache Konstruktion der erfindungsgemäßen Vorrichtung erreicht.

Der Begriff "Behang" wird zur Bezeichnung eines bewegbaren, in der Regel auf die Wickelwelle aufrollbaren Schließ- oder Schutzelements verwendet.

Bei der erfindungsgemäßen Vorrichtung ist dem ersten Zahnrad ein erster Inkrementalring zugeordnet, der gleichmäßig um eine erste Drehachse verteilte erste Signalgeber aufweist, und dem zweiten Zahnrad ist ein zweiter Inkrementalring zugeordnet, der gleichmäßig um eine zweite Drehachse verteilte zweite Signalgeber aufweist.

Die jeweiligen Zahnräder oder die mit diesen mittelbar oder unmittelbar verbundene Bauteile sind hierbei als Inkrementalringe ausgebildet oder ihnen sind Inkrementalringe zugeordnet. Als Inkrementalringe werden hier sich drehende Bauteile verstanden, die in Abhängigkeit von ihrer Drehung vom Signalgeber bewirkte Impulse erzeugen, die vom Sensor erfassbar sind. Je größer die Anzahl der Signalgeber ist, um so schneller und empfindlicher kann der Auflaufschutz reagieren. Im einfachsten Fall weist jeder Inkrementalring nur einen einzigen Signalgeber auf, wodurch der Sensor nur nach jeder vollen Umdrehung des Inkrementalrings ein Signal empfängt. Dadurch ergibt sich aber eine relativ geringe Empfindlichkeit des Auflaufschutzes, so dass diese Ausführungsform nicht bevorzugt ist.

Vorzugsweise sind daher mehrere Signalgeber um den Umfang eines jeden Inkrementalrings gleichmäßig verteilt. Im Normalbetrieb rotieren die beiden Inkrementalringe synchron oder mit fest vorgegebenem Versatz, so dass sich für beide Inkrementalringe eine konstante Impulszahl pro Zeiteinheit und ein konstantes Verhältnis dieser zeitbezogenen Impulszahlen einstellt. Beim Auftreffen des Behangs auf ein Hindernis kommt es jedoch zur Ausbildung - oder einer Änderung - eines örtlichen Versatzes zwischen den magnetischen Zonen des ersten und zweiten Inkrementalrings und damit zu einer Änderung des erwähnten zeitbezogenen Impulszahlenverhältnisses. Dieses Ereignis wird vom Sensor unmittelbar erfasst und von der Auswerte- und Steuereinrichtung ausgewertet, und führt zur Abschaltung des Elektromotors oder zur Umkehr seiner Drehrichtung.

Die vom Signalgeber bewirkten Impulse sind. Wesentlich ist, dass die vom Sensor erfassten Signale kontinuierlich an die Auswerteeinrichtung , übermittelt werden.

Weiterhin hat es sich als günstig erwiesen, wenn der Sensor mindestens einen Magnetfeldsensor umfasst, und der erste Inkrementalring gleichmäßig um die erste Drehachse verteilte, magnetische Zonen aufweist, und der zweite Inkrementalring gleichmäßig um die zweite Drehachse verteilte, magnetische Zonen aufweist.

Die Inkrementalringe bewirken bei ihrer Drehung vom Sensor erfassbare periodisch wiederkehrende magnetische Signale. Hierzu sind auf den Inkrementalringen magnetische Zonen mit hoher Magnetfelddichte vorgesehen, die vom Magnetfeldsensor leicht erfassbar sind. Die magnetischen Zonen sind umgeben von Zonen geringerer Magnetfelddichte. Vorzugsweise sind mehrere magnetische Zonen um den Umfang eines jeden Inkrementalrings gleichmäßig verteilt, die sich mit anderen Zonen abwechseln, in denen die Magnetfelddichte geringer oder Null ist.

Die Drehachsen der Inkrementalringe können zueinander versetzt sein. Bei einer bevorzugten Ausführungsform der erfindungsgemäßen Vorrichtung fallen die Drehachsen jedoch zusammen, so dass die Signalgeber des ersten und des zweiten Inkrementalrings in einer gemeinsamen Umfangsfläche um eine gemeinsame Drehachse angeordnet sind.

Bei der Drehbewegung der Wickelwelle und der Antriebswelle sind die Signalgeber von erstem und zweitem Inkrementalring in einer gemeinsamen Umfangsfläche angeordnet, wobei sie synchron um die gemeinsame Drehachse rotieren. Die Inkrementalringe weisen somit gleichen Außendurchmesser auf und die magnetischen Zonen sind auf den jeweiligen Stirnseiten der Inkrementalringe vorgesehen. Dies erleichtert die synchrone Erfassung der von den Signalgebern ausgehenden Signale mittels der Sensoren.

Im Hinblick auf ein genaues und reproduzierbares Spiel zwischen Wickelwelle und Antriebswelle hat es sich bewährt, wenn die Inkrementalringe als Mitnehmer ausgebildet sind, wobei stirnseitige Ausformungen des einen Inkrementalrings in entsprechende stirnseitige Gegenausformungen des anderen Inkrementalrings- unter Belassung des Spiels - greifen.

Die ineinandergreifenden Inkrementalringe bilden hierbei die mit Spiel versehene Verzahnung zwischen Wickelwelle und An-triebswelle und stellen selbst "Zahnräder" (oder mit diesen verbundene oder drehende Bauteile) im Sinne der Erfindung dar.

Bei ausreichend dicht benachbarten magnetischen Zonen wird eine Ausführungsform der erfindungsgemäßen Vorrichtung ermöglicht, bei der für die gleichzeitige Erfassung beider Signalgeber - und somit für die gleichzeitige Erfassung der Bewegung von Wickelwelle und Antriebswelle - ein einziger Sensor, wie etwa ein Magnetfeldsensor, ausreicht. Im einfachsten Fall verlaufen die magnetischen Zonen beider Inkrementalringe hierbei in der erwähnten gemeinsamen Umfangsfläche und sie sind wechselweise in einer gemeinsamen axialen Ebene angeordnet, die sich senkrecht zur Inkrementalring- Drehachse erstreckt.

Es hat sich bewährt, wenn die magnetischen Zonen durch magnetische Bauteile gebildet werden, die um den Umfang gleichmäßig verteilt am Inkrementalring fixiert sind.

Dies ermöglicht den Einsatz preiswerter magnetischer Bauteile zur Ausbildung der magnetischen Zonen und die Erstellung eines deutlichen und leicht erfassbaren. Unterschieds der Dichten der Magnetfeldlinien zwischen dem Bereich der magnetischen Zonen und benachbarten Bereichen.

Alternativ dazu und gleichermaßen bevorzugt, bestehen die jeweiligen Inkrementalringe jedoch aus magnetischem Werkstoff, wobei die magnetischen Zonen durch Ausnehmungen des Inkrementalrings voneinander getrennt sind.

Dabei erübrigt sich der Aufwand für eine Fixierung magnetischer Bauteile. Die magnetischen Zonen werden durch die Geometrie des Inkrementalrings vorgegeben und sie zeichnen sich dadurch aus, dass sie im Bereich des Magnetfeldsensors eine höhere Dichte an Magnetfeldlinien erzeugen als benachbarte Bereiche.

Alternativ dazu hat es sich auch als günstig erwiesen, wenn die magnetischen Zonen jeweils dem Bereich der Verzahnung von erstem und zweitem Zahnrad zugeordnet sind.

Die Anordnung und Anzahl der magnetischen Zonen orientiert sich in diesem Fall an der Verzahnung der Zahnräder. Die Anzahl der magnetischen Zonen eines Zahnrades entspricht der Anzahl seiner, Zähne. Die Zahnräder bestehen dabei wenigstens im Bereich der Zähne aus ferromagnetischem Material oder sie sind mit magnetischem Material bestückt.

Gleichermaßen sind bei ineinandergreifenden Inkrementalringen die magnetischen Zonen vorteilhaft im Bereich der Ausformungen oder Gegenausformungen vorgesehen.

Die Anordnung und Anzahl der magnetischen Zonen orientiert sich hierbei an der Verzahnung der Inkrementalringe. Die Anzahl der magnetischen Zonen eines Inkrementalrings entspricht der Anzahl seiner Ausformungen.

In dem Zusammenhang hat es sich besonders bewährt, wenn die Inkrementalringe aus magnetischem Kunststoff bestehen.

Dadurch wird eine besonders preiswerte Fertigung der Inkrementalringe durch Spritzgießen ermöglicht.

In einer anderen bevorzugten Ausführungsform sind die magnetischen Zonen durch magnetische Bauteile gebildet, die gleichmäßig um den Umfang des jeweiligen Zahnrades verteilt und darauf fixiert sind.

Der Magnetfeldsensor ist als Hall- Sensor ausgebildet, da dieser über eine große Bandbreite hinweg ein gut nutzbares Ausgangssignal liefert. Dabei hat es sich weiterhin bewährt, wenn der Sensor als Differenz-Hall-Element mit zwei Sensorbereichen aus-gebildet ist.

Die beiden Sensorbereiche sind dazu geeignet, gleichzeitig die magnetischen Zonen beider Inkrementalringe zu erfassen. Im Fall von magnetischen Zonen, die im Bereich der Zähne eines Zahnrades ausgebildet oder mit einem dementsprechenden Abstand voneinander angeordnet sind, ist der Abstand der zwei Sensorbereiche vorzugsweise so gewählt, dass er einem ungeradzahligen Vielfachen des halben Abstands zwischen zwei Zähnen entspricht. Dadurch wird immer ein Sensorbereich von konzentrierten Feldlinien beaufschlagt, während beim anderen Sensorbereich die Feldlinien die geringste Konzentration aufweisen, so dass ein Ausgangssignal mit gutem Störabstand und guter Amplitude mit Hilfe eines Differenzverstärkers erreicht werden kann.

Insbesondere im Hinblick auf eine hohe Betriebssicherheit und Verlässlichkeit wird eine Ausführungsform der erfindungsgemäßen Vorrichtung bevorzugt, bei der ein Federelement vorgesehen ist, welches eine gegen die Ausübung des mechanischen Spiels zwischen erstem Zahnrad und zweitem Zahnrad gerichtete Federkraft erzeugt.

Die Federvorspannung des Federelements ist. gegen die Ausübung des mechanischen Spiels gerichtet. Dadurch wird gewährleistet, dass sich das erste und zweite Zahnrad nicht versehentlich, zum Beispiel infolge kleiner Ruckler beim Anfahren des Motors - so weit gegeneinander verschieben, dass der Abschaltvorgang ausgelöst wird. Ergänzend zum Gewicht des Behangs werden die - belasteten - Flächen der Verzahnung durch die Federkraft zusätzlich gegeneinander gepresst. Dies ist gerade dann von Vorteil, wenn das auf der Verzahnung lastende Gewicht des Behangs gering ist, also zu Anfang der Abwärtsbewegung und zum Ende der Aufwärtsbewegung. Vorteilhafterweise ist die Federkonstante des Federelements einstellbar oder die Federelemente sind austauschbar, so dass spezifische Erfordernisse vor Ort (Gewicht des Rollladens und dergleichen) berücksichtigt werden können.

Weiterhin hat es sich bewährt, wenn das mechanische Spiel zwischen erstem und zweitem Zahnrad mindestens 5 Winkelgrade, vorzugsweise mindestens 20 Winkelgrade, beträgt.

Bei einem Spiel von weniger als 5 Winkelgraden wird eine besonders hoch auflösende Signalerfassung benötigt. Zum Erreichen des Abschaltkriteriums ist nicht ein Versatz im Umfang des gesamten zur Verfügung stehenden Spiels erforderlich. Das Abschaltkriterium kann auch schon vorher erreicht sein; ein größeres Spiel stört daher nicht und auch ein Spiel bis zu 360 Winkelgraden ist geeignet.

Bei der erfindungsgemäßen Vorrichtung ist erste Signalgeber gleichzeitig als Inkrementalgeber zur Steuerung der Auf- und Abbewegung eines Behangs einsetzbar.

Der gesamten Bewegungsstrecke beim Aufund Abwickeln des Behangs wird hierbei eine Anzahl von Impulsen (Inkrementalen) des Signalgebers zugeordnet, so dass anhand einer Zähleinrichtung die obere und untere Endlage des Behangs und auch Zwischenpositionen erfassbar sind. Der erste Signalgeber dreht mit dem der Wickelwelle zugeordneten ersten Zahnrad.

### Ausführungsbeispiel

Ausführungsbeispiele der Erfindung sind in der Zeichnung dargestellt und werden nachfolgend näher erläutert. In der Zeichnung zeigt im Einzelnen
**Figur 1** eine Prinzipdarstellung zur Erläuterung der Wirkungsweise der Erfindung, mit einer Kupplung von Wickelwelle und Motorwelle mit mechanisch schlüssiger Verbindung von erstem Zahnrad und zweitem Zahnrad im Normalbetrieb bei Einsatz von zwei Sensoren,
**Figur 2** die Kupplung von Figur 1 beim Auftreffen des Behangs auf ein Hindernis und die dadurch bewirkte Verschiebung der Zahnräder gegeneinander,
**Figur 3** eine Prinzipdarstellung zur Erläuterung der Wirkungsweise der Erfindung, mit einer Kupplung von Wickelwelle und Motorwelle mit mechanisch schlüssiger Verbindung von erstem Zahnrad und zweitem Zahnrad im Normalbetrieb bei Einsatz von nur einem Sensor,
**Figur 4** die Kupplung von Figur 3 beim Auftreffen des Behangs auf ein Hindernis und die dadurch bewirkte Verschiebung der Zahnräder gegeneinander,
**Figur 5** ein Referenzbeispiel einer Vorrichtung in dreidimensionaler Darstellung,
**Figur 6** die Vorrichtung von Figur 5 in einer Draufsicht auf den ersten und den zweiten Inkrementalring,
**Figur 7** das Ausführungsbeispiel von Figur 5 und 6 anhand eines Schnittes durch die Getriebekupplung, und
**Figur 8** ein Detail des Ausführungsbeispiels gemäß Figur 7 in dreidimensionaler Explosionsdarstellung.

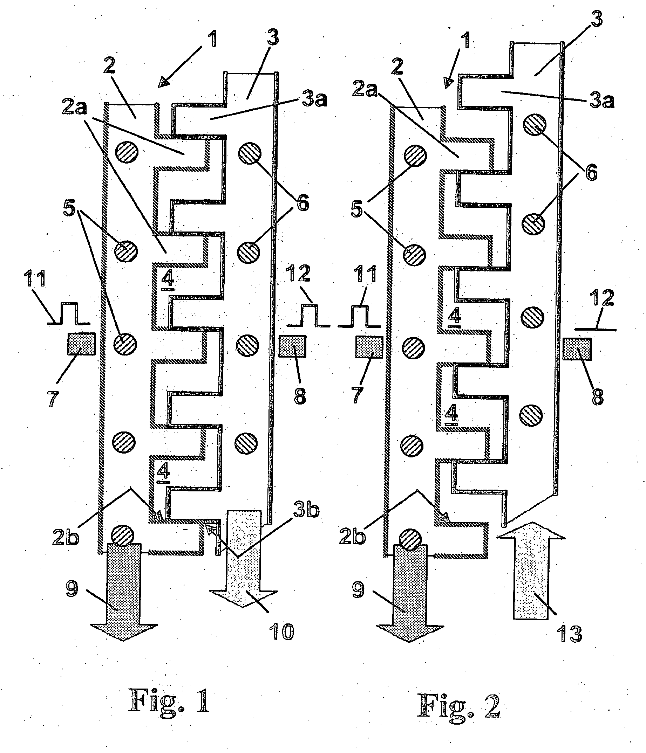

**Figur 1** zeigt schematisch eine Getriebekupplung für einen elektrischen Rollladen-Gurtwickler mit einem Gleichstrommotor, der eine Wickelwelle zum Aufwickeln des Rollladenpanzers antreibt. Die Stromversorgung für den Motor erfolgt über ein Schaltnetzteil für die Transformation von 230 Volt Wechselstrom auf 24 Volt Gleichstrom.

Die Getriebekupplung 1 zwischen Motor und Welle umfasst ein Antriebszahnrad 2, das dem Motor zugeordnet ist und ein Abtriebszahnrad 3, das sich mit der (in der Figur nicht dargestellten) Wickelwelle dreht. Zwischen den ineinandergreifenden Zähnen 2a, 3a der Zahnräder 2 und 3 ist ein mechanisches Spiel vorhanden, dass durch den Hohlraum 4 repräsentiert wird.

Die Zahnräder 2, 3 sind jeweils mit Magneten 5, 6 bestückt, die gleichmäßig um den Umfang verteilt sind. Dem Antriebszahnrad 2 ist ein erster Hall-Sensor 7 zugeordnet, der Impulse 11 der Magnetfelder der Magnete 5 des Antriebszahnrades 2 erfasst. Dem Abtriebszahnrad 3 ist ein zweiter Hall-Sensor 8 zugeordnet, der Impulse 12 der Magnetfelder der Magnete 6 des Abtriebszahnrads 3 erfasst. Die Magnete 5, 6 sind um den Umfang der jeweiligen Zahnräder gleichmäßig verteilt. Die Hall-Sensoren 7, 8 sind jeweils mit einer (in der Figur nicht dargestellten) Auswerte- und Steuereinheit der Antriebsvorrichtung verbunden und so angeordnet, dass sie im Normalbetrieb die von den jeweiligen Magneten 5, 6 ausgehenden Impulse 11, 12 gleichzeitig empfangen und an die Auswerte- und Steuereinheit abgeben.

Figur 1 zeigt die Lage der Zahnräder zueinander im Normalbetrieb. Das Antriebszahnrad 2 dreht sich in der durch den Richtungspfeil 9 angedeuteten Richtung, und das Abtriebszahnrad 3 - wie der Richtungspfeil 10 anzeigt - in derselben Richtung. Infolge des Gewichts des Rollladenpanzers liegen die Zähne 3a des Abtriebszahnrads mit ihrer vorderen Flanke 3b an der hinteren Flanke 2b der Zähne 2a an. Durch diesen Formschluss wird das Gewicht des Rollladenpanzers abgetragen und der Motor wirkt beim Herablassen des Rollladenpanzers somit als Bremse. Zusätzlich drückt das in der Figur nicht dargestellte Federelement die vorderen Zahnflanken 3b gegen die hinteren Zahnflanken 2b.

Stößt der Rollladenpanzer bei der Abwärtsbewegung auf ein Hindernis, stauen sich die einzelnen Lamellen auf, so dass sich auf das Abtriebszahnrad 3 wirkende Gewicht des Rollladenpanzers reduziert, bis schließlich die durch das Antriebszahnrad 2 ausgeübte Kraft gegen die Kraft eines (in der Figur nicht dargestellten) Federelementes genügt, um die Zahnräder 2, 3 innerhalb des gegebenen mechanischen Spiels (4) so gegeneinander zu verschieben, wie dies schematisch in der

**Figur 2** dargestellt und durch die Richtungspfeile 9 und 13 symbolisiert ist.

Infolge der Verschiebung der Zahnräder 2, 3 gegeneinander sind die durch die Magnete 5, 6 in den Hall-Sensoren 7 und 8 ausgelösten Impulse 11, 12, nicht mehr synchron, was von der Auswerte- und Steuereinheit als Abschaltkriterium gewertet, und der Rollladenantrieb demnach abgeschaltet wird.

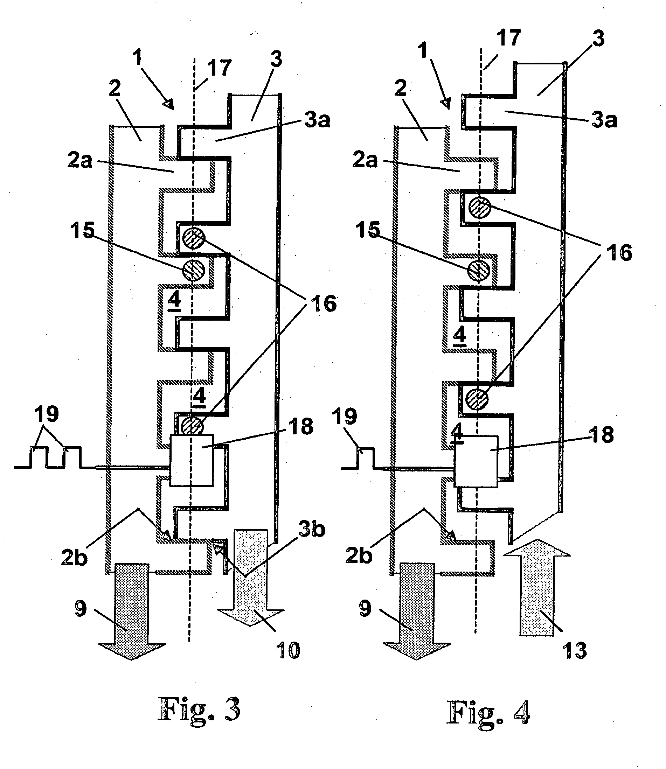

Sofern in den Figuren 3 und 4 dieselben Bezugsziffern wie in den Figuren 1 und 2 verwendet sind, so sind damit baugleiche oder äquivalente Bauteile und Bestandteile bezeichnet, wie sie oben anhand der Beschreibung der ersten Ausführungsform der erfindungsgemäßen Vorrichtung näher erläutert sind.

Die Ausführungsform der Getriebekupplung gemäß den **Figuren 3 und 4** unterscheidet sich von der oben beschriebenen Ausführungsform in der Anzahl and der Anordnung der Magnete 15 und des Hall-Sensors 18. Die Magnete 15, 16 sind hierbei auf jedem zweiten Zahn 2a, 3a der Zahnräder 2 und 3 fixiert, und zwar derart, dass sie nicht nur auf einer gemeinsamen Umfangsfläche um die Zahnräder 2, 3 angeordnet sind (in der Papierebene), sondern auch in einer gemeinsamen Schnittebene 17, die zwischen den Zahnrädern 2, 3 und parallel zu diesen verläuft. Die Magnete 15, 16 sind dabei auf im Normalbetrieb aneinander liegenden Zähnen 2a, 3a vorgesehen.

Dadurch ist es möglich, die von den Magneten 15, 16 ausgehenden Impulse mittels eines einzigen Hall-Sensors 18 zu erfassen, der in der Schnittebene 17 und oberhalb der gemeinsamen Umfangsfläche angeordnet ist (oberhalb der Papierebene), und der als Differenz-Hall-Sensor ausgebildet ist.

Figur 3 zeigt den Zustand im Normalbetrieb. Das Antriebszahnrad 2 dreht sich in der durch den Richtungspfeil 9 angedeuteten Richtung, und das Abtriebszahnrad 3 - wie der Richtungspfeil 10 anzeigt - in derselben Richtung. Infolge des Gewichts des Rollladenpanzers liegen die Zähne 3a des Abtriebszahnrads mit ihrer vorderen Flanke 3b an der hinteren Flanke 2b der Zähne 2a an. Durch diesen Formschluss wird das Gewicht des Rollladenpanzers abgetragen und der Motor wirkt beim Herablassen des Rollladenpanzers somit als Bremse. Der Hall-Sensor erfasst die von den Magneten 15, 16 erzeugten Impulse 19 gleichzeitig oder in kurz hintereinander in festem Abstand.

Stößt der Rollladenpanzer bei der Abwärtsbewegung auf ein Hindernis, stauen sich die einzelnen Lamellen auf, so dass sich auf das Abtriebszahnrad 3 wirkende Gewicht des Rollladenpanzers reduziert, bis schließlich die durch das Antriebszahnrad 2 ausgeübte Kraft gegen die Kraft eines (in der Figur nicht dargestellten) Federelementes genügt, um die Zahnräder 2, 3 innerhalb des gegebenen mechanischen Spiels (4) so gegeneinander zu verschieben, wie dies schematisch in der Figur 4 dargestellt und durch die Richtungspfeile 9 und 13 symbolisiert ist. Infolge der Verschiebung der Zahnräder 2, 3 gegeneinander erfasst der Hall-Sensor 18 lediglich einen vom Magnet 15 ausgelösten Impuls 19 oder zwar noch einen weiteren Impuls, diesen jedoch mit Verspätung. Dies wird von der Auswerte- und Steuereinheit als Abschaltkriterium gewertet, und der Rollladenantrieb demnach abgeschaltet.

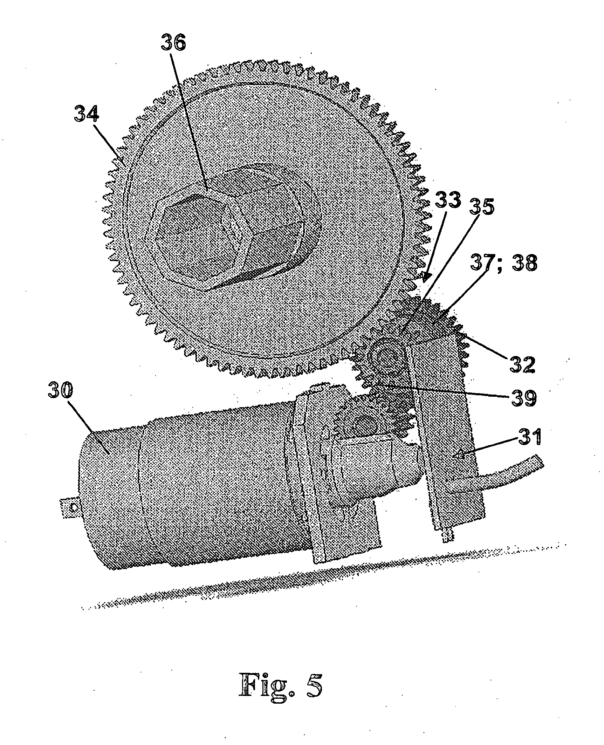

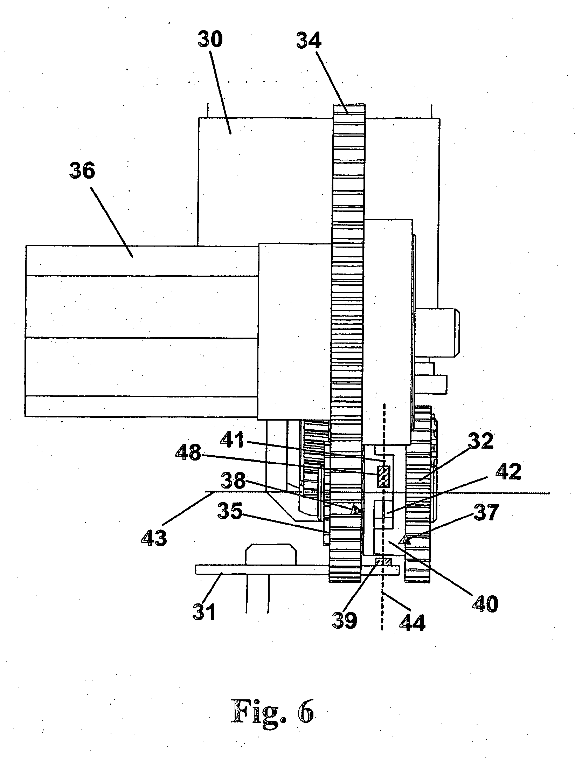

Die in **Figur 5** in dreidimensionaler Ansicht schematisch dargestellte Ausführungsform eines Referenzbeispiels einer Vorrichtung ist mit einer Auflaufsicherung versehen, wie sie in den Figuren 3 und 4 schematisch dargestellt ist. Die Vorrichtung umfasst einen Gleichstromelektromotor 30, der über eine Getriebekupplung 33 mit einer Wickelwelle verbunden ist. Hierzu umfasst die Getriebekupplung 33 ein Antriebszahnrad 32, das mit der Motorwelle dreht und ein Wickelwellenzahnrad 34, das mit einem Abtriebszahnrad 35 kämmt. Eine Flachseite des Wickelwellenzahnrades 34 ist mit einem im Querschnitt achteckigen Adapterring 36 versehen, auf den die (in der Figur nicht dargestellte) Wickelwelle aufgesteckt wird. Außerdem umfasst die Vorrichtung einen Hall-Sensor (39; siehe Fig. 6), der mit einer Auswerte-und Steuereinrichtung verbunden ist und von dem in der Ansicht von Figur 5 nur die Rückseite der Platine 31 und der elektrische Anschluss erkennbar sind.

Die zueinander weisenden Flachseiten von Antriebszahnrad 32 und Abtriebszahnrad 35 sind jeweils mit einem Inkrementalring 37, 38 verbunden, die in der Darstellung von **Figur 6** des Referenzbeispiels besser erkennbar sind. Der Inkrementalring 38 ist dem Wickelwellenzahnrad 34 und dem Abtriebszahnrad 35 zuzuordnen, und der Inkrementalring 37 ist dem Motorwelle und dem Antriebzahnrad 32 zuzuordnen. Die Inkrementalringe 37, 38 sind formschlüssig miteinander verbunden, indem sie jeweils sechs stirnseitige Ausformungen 40, 41 aufweisen, die in entsprechende stirnseitige Gegenausformungen des anderen Inkrementalrings - unter Belassung eines Spiels 42 - eingreifen.

Die Inkrementalringe 37, 38 werden durch Spritzgießen aus einem Kunststoff gefertigt. In die Ausformungen 40; 41 sind jeweils drei Magnete 48 in gleichmäßiger Verteilung um den Umfang der Inkrementalringe 37, 38 fest eingesetzt. Die Magnete 48 sind somit in einer mittig zwischen den Inkrementalringen 37, 38 verlaufenden Schnittebene 44 und in einer gemeinsamen Umfangsfläche angeordnet, so dass sie wechselweise magnetische Zonen erzeugen - die den ihrer Ausformungen 40, 41 zugeordnet sind.

In der Schnittebene 44 ist auch der Hall-Sensor 39 angeordnet. Wichtig ist, dass die Ausformungen 40, 41 (= magnetische Zonen) in derselben Umfangsfläche um eine gemeinsame Drehachse 43 rotieren. Der in der dieser Schnittebene 44 den magnetischen Zonen (40, 41) gegenüberliegende Hall-Sensor 39 ist daher geeignet, die magnetischen Zonen (40, 41) beider Inkrementalringe 37, 38 zu erfassen. Die Drehbewegung der Wickelwelle als auch der Antriebswelle ist somit anhand des einen Hall-Sensors 39 erfassbar.

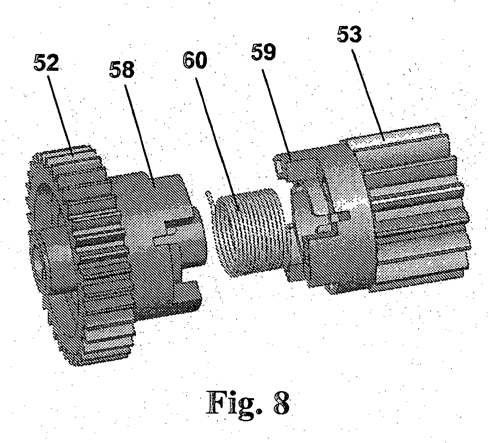

Im Normalbetrieb drehen sich beide Inkrementalringe 37, 38 synchron um ihre gemeinsame Drehachse 43, wobei die hintere Flanke der einen Ausformung 40 stets (sowohl bei der Auf- als auch bei der Abbewegung des Rollladenpanzers) an der vorderen Flanke der anderen Ausformung 41 anliegt. Dies wird durch die Vorspannung eines (nicht dargestellten) Federelements gewährleistet, wie es weiter unten anhand Figur 8 näher erläutert wird. Das Gewicht des Rollladenpanzers trägt dazu noch bei.

Nur beim Aufstauen des Rollladenpanzers auf einem Hindernis verschieben sich die Zahnräder 32 und 35, beziehungsweise die mit den Zahnrädern 32, 35 verbundenen Inkrementalringe 37, 38 gegeneinander im Rahmen des mechanischen Spiels 42, was vom Hall-Sensor 39 als Unstetigkeit in der zeitlichen Abfolge der Magnetfeldimpulse unmittelbar erfasst und an die Auswerte- und Steuereinrichtung weitergeleitet wird, wie dies oben anhand der Schemazeichnung (Figur 3 und Figur 4) näher erläutert ist.

Der der Wickelwelle zugeordnete Inkrementalring 38 dient gleichzeitig zur Feststellung der aktuellen Position des Rollladenpanzers. Zu diesem Zweck umfasst die Auswerte- und Steuereinrichtung ein Zählwerk und der gesamten Bewegungsstrecke beim Auf- und Abwickeln des Panzers wird eine Anzahl von Inkrementalen zugeordnet. Die bei einer Bewegung des Rollladenpanzers vom Hall-Sensor übermittelten Impulse werden in üblicher Weise ausgewertet und der Speicherinhalt des Zählwerks laufend angepasst.

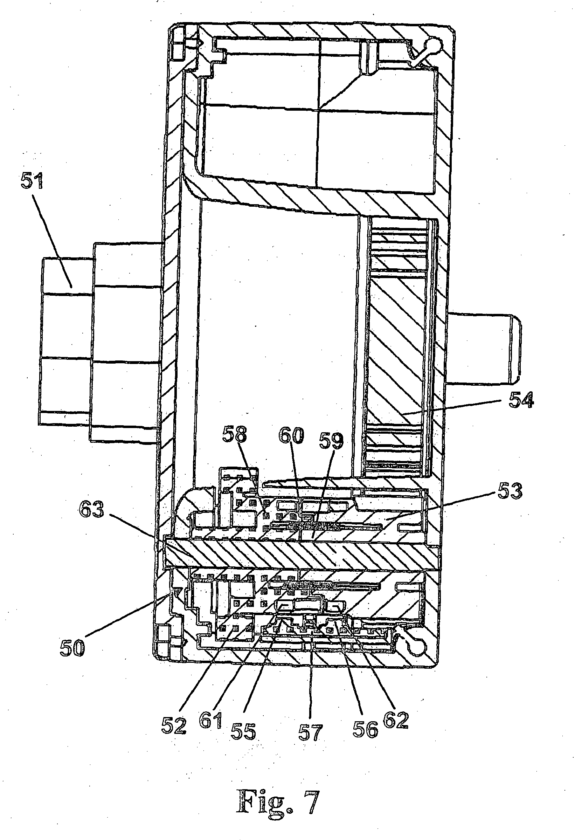

Die in **Figur 7** dargestellte Ausführungsform der erfindungsgemäßen Vorrichtung ist mit einer Auflaufsicherung versehen, wie sie in den Figuren 1 und 2 schematisch dargestellt ist.

Die Vorrichtung umfasst einen Gleichstromelektromotor, der über eine Getriebekupplung 50 mit einer Wickelwelle (zu erkennen ist der Adapterring 51) verbunden ist. Hierzu umfasst die Getriebekupplung 50 ein Antriebszahnrad 52, das mit der Motorwelle dreht und ein Abtriebszahnrad 53 das mit dem Wickelwellenzahnrad 54 kämmt.

Außerdem umfasst die Vorrichtung zwei auf einer Platine 57 angeordnete Hall-Sensoren 55 und 56, die mit einer Auswerte- und Steuereinrichtung verbunden sind.

Die zueinander weisenden Flachseiten von Antriebszahnrad 52 und Abtriebszahnrad 53 sind jeweils als ineinandergreifende Inkrementalringe 58; 59 ausgebildet. Der Inkrementalring 58 ist dem Antriebszahnrad 52 zugeordnet, und der Inkrementalring 59 dem Abtriebszahnrad 53. Die Inkrementalringe 58; 59 sind formschlüssig miteinander verbunden, indem sie jeweils sechs stirnseitige Ausformungen aufweisen (in der Schnittdarstellung nicht zu erkennen; siehe entsprechende Darstellungen in Figur 5 und in Figur 8), die in stirnseitige Gegenausformungen des anderen Inkrementalrings - unter Belassung eines Spiels - eingreifen. Eine Schenkelfeder 60 drückt die Flanken der Ausformungen des einen Inkrementalrings gegen die Flanken der Gegenausformungen des anderen Inkrementalrings, wie dies weiter unten anhand Figur 8 noch näher erläutert wird.

Die Inkrementalringe 58, 59 und die entsprechenden Zahnräder 52, 53 sind einstückig ausgebildet und durch Spritzgießen aus einem Kunststoff gefertigt. In die Ausformungen 58, 59 sind jeweils Magnete 61, 62 (jeweils 6 pro Inkrementalring) in gleichmäßiger Verteilung um den Umfang der Inkfementalringe 58; 59 so eingesetzt, dass sie im Normalbetrieb bei Rotation der Zahnräder 52; 53 um die Achse 63 die Hall-Sensoren 55, 56 synchron passieren. Dabei liegt die hintere Flanke der einen Ausformung stets (sowohl bei der Auf- als auch bei der Abbewegung des Rollladenpanzers) an der vorderen Flanke der anderen Ausformung an.

Beim Aufstauen des Rollladenpanzers auf einem Hindernis verschieben sich die Zahnräder 52 und 53, beziehungsweise die mit diesem verbundenen Inkrementatringe 58, 59 gegeneinander im Rahmen des mechanischen Spiels, so dass die beiden Hall-Sensoren 55; 56 keine synchronen Impulse empfangen, was an die Auswerte- und Steuereinrichtung weitergeleitet und als Abschaltkriterium ausgewertet wird, wie dies oben anhand der Schemazeichnung (Figur 1 und Figur 2) näher erläutert ist.

Auch bei dieser Ausführungsform dient der der Wickelwelle (51) zugeordnete Inkrementalring 59 gleichzeitig zur Feststellung der aktuellen Position des Rollladenpanzers. Zu diesem Zweck umfasst die Auswerte- und Steuereinrichtung ein Zählwerk, und der gesamten Bewegungsstrecke beim Auf- und Abwickeln des Panzers wird eine Anzahl von Impulsen zugeordnet. Die bei einer Bewegung des Rollladenpanzers vom Hall-Sensor übermittelten Impulse werden in üblicher Weise ausgewertet und der Speicherinhalt des Zählwerks laufend angepasst.

**Figur 8** zeigt in dreidimensionaler Explosionsdarstellung das Antriebszahnrad 52 und das Abtriebszahnrad 53 mit den damit verbundenen Inkrementalringen 58; 59, die mit ihren sechs stirnseitigen Ausformungen und Gegenausformungen zueinander weisen und ineinander greifen. Die Schenkelfeder 60 drückt die Flanken der Ausformungen des einen Inkrementalrings 58 gegen die Flanken der Gegenausformungen des anderen Inkrementalrings 59, wobei die Federvorspannung gegen die Ausübung des mechanischen Spiels gerichtet ist, und so ein versehentliches Abschalten durch kleine Ruckler des Rollladens vermeidet. Je höher die Federvorspannung gewählt wird - im Ausführungsbeispiel sind es 100 g - umso größer muss die Gegenkraft sein, die ein gegenseitiges Verschieben der Inkrementalringe 58, 59 und ein Abschalten des Motors bewirken kann.

## Patentansprüche

1. Vorrichtung zur Stillstandssteuerung einer motorischen Antriebseinrichtung eines Rollladens, einer Markise, eines Garagentors und dergleichen, mit einer Wickelwelle, die über eine Getriebekupplung (1; 50) mit einer Antriebswelle eines Elektromotors unter Belassung eines mechanischen Spiels (4) verbunden ist, mit mindestens einem Sensor (7; 8; 61; 62) zum Erfassen eines Abschaltkriteriums, sowie mit einer Auswerte- und Steuereinrichtung, mittels der die Stromversorgung für den Elektromotor in Abhängigkeit von Ausgangssignalen des Sensors (7; 8; 55; 56) schaltbar ist, wobei die Getriebekupplung (1; 50) ein erstes Zahnrad (3; 53) umfasst, das mit der Wickelwelle dreht und das - unter Belassung des mechanischen Spiels (4) - unmittelbar oder mittelbar im Eingriff mit einem zweiten Zahnrad (2; 52) steht, das mit der Antriebswelle dreht, **dadurch gekennzeichnet, dass** der mindestens eine Sensor (7; 8; 55; 56) als Hall-Sensor ausgebildet ist, und dass das erste Zahnrad (3; 53) als erster Inkrementalring (59) ausgebildet ist, der gleichmäßig um eine erste Drehachse verteilte erste Signalgeber (6; 62) aufweist, die zur Abgabe von periodischen und mit der Drehbewegung des ersten Zahnrades (3; 53) korrelierten Signalen (12) geeignet sind, und wobei das zweite Zahnrad (2; 52) als zweiter Inkrementalring (58) ausgebildet ist, der gleichmäßig um eine zweite Drehachse verteilte zweite Signalgeber (5; 61) aufweist, die zur Abgabe von periodischen und mit der Drehbewegung des zweiten Zahnrades (2; 52) korrelierten Signalen geeignet sind, und wobei mittels des mindestens einen Hall-Sensors (7; 8; 55; 56) eine relative Änderung der örtlichen Position oder der zeitlichen Abfolge der Signale (11; 12) von ersten und zweiten Signalgebern (5; 6; 61; 62) erfassbar ist, und wobei die ersten Signalgeber (6; 62) gleichzeitig als Inkrementalgeber zur Steuerung der Auf- und Abbewegung eines Behangs dienen, so dass mittels einer Zähleinrichtung obere und untere Endlage und Zwischenpositionen des Behangs erfassbar sind und dieselbe Auswerte- und Steuereinrichtung gleichzeitig für die Stillstandssteuerung und für eine Positionssteuerung und Endlagenabschaltung des Behangs einsetzbar ist.

2. Vorrichtung nach Anspruch 1, **dadurch gekennzeichnet, dass** der Sensor (7; 8; 55; 56) mindestens einen Magnetfeldsensor umfasst, und dass der erste Inkrementalring (59) gleichmäßig um die erste Drehachse verteilte, magnetische Zonen aufweist, und dass der zweite Inkrementalring (58) gleichmäßig um die zweite Drehachse verteilte, magnetische Zonen aufweist.

3. Vorrichtung nach Anspruch 1 oder 2, **dadurch gekennzeichnet, dass** die Signalgeber des ersten und des zweiten Inkrementalrings (58; 59) in einer gemeinsamen Umfangsfläche um eine gemeinsame Drehachse angeordnet sind.

4. Vorrichtung nach einem der vorhergehenden Ansprüche, dadurch gekenn-zeichnet, dass die Inkrementalringe (58; 59) als Mitnehmer ausgebildet sind, wobei stirnseitige Ausformungen (2a; 3a) des einen Inkrementalrings (58) in entsprechende stirnseitige Gegenausformungen des anderen Inkrementalrings (59) - unter Belassung eines Spiels (4) - greifen.

5. Vorrichtung nach Anspruch 2 und Anspruch 4, **dadurch gekennzeichnet, dass** die magnetischen Zonen um den Inkrementalring (57; 58) entsprechend dem Wechsel von Ausformungen (2a; 3a) und Gegenausformungen verteilt sind.

6. Vorrichtung nach einem der Ansprüche2 oder 5, **dadurch gekennzeichnet**, das die magnetischen Zonen durch magnetische Bauteile gebildet werden, die gleichmäßig um den Umfang des Zahnrades (2; 3; 52; 53) verteilt und darauf fixiert sind.

7. Vorrichtung nach einem der Ansprüche2, 5 und 6, **dadurch gekennzeichnet, dass** die Inkrementalringe aus magnetischem Werkstoff bestehen, wobei die magnetischen Zonen jeweils durch Ausnehmungen des Inkrementalrings voneinander getrennt sind.

8. Vorrichtung nach Anspruch 7, **dadurch gekennzeichnet, dass** die Inkremental-ringe aus magnetischem Kunststoff bestehen.

9. Vorrichtung nach einem der Ansprüche1 oder 5 bis 8, **dadurch gekennzeichnet, dass** die magnetischen Zonen jeweils dem Bereich der Verzahnung (2a; 3a) von erstem und zweitem Zahnrad (2; 3) zugeordnet sind.

10. Vorrichtung nach einem der vorhergehenden Ansprüche, **dadurch gekennzeichnet, dass** ein Federelement (60) vorgesehen ist, welches eine gegen die Ausübung des mechanischen Spiels (4;) zwischen erstem Zahnrad (3) und zweitem Zahnrad (2) gerichtete Federkraft erzeugt.

11. Vorrichtung nach einem der vorhergehenden Ansprüche, **dadurch gekennzeichnet, dass** der Sensor (7; 8; 55; 56) als Dififerenz-Hall-Element mit zwei Sensorbereichen ausgebildet ist.

12. Vorrichtung nach einem der vorhergehenden Ansprüche, **dadurch gekennzeichnet, dass** das mechanische Spiel (4) zwischen erstem und zweitem Zahnrad (2; 3) mindestens 5 Winkelgrade, vorzugsweise mindestens 10 Winkelgrade, beträgt.

## Claims

1. A device for controlling the standstill state of a motorized drive mechanism of a roller shutter, an awning, a garage door, and the like, comprising a winding shaft which is connected via a gear coupling (1; 50) to a drive shaft of an electric motor (30) while leaving a mechanical play (4), at least one sensor (7; 8; 61; 62) for detecting a switch-off criterion, and an evaluation and control device by means of which the power supply for the electric motor is switchable in response to output signals of the sensor (7; 8; 55; 56), the gear coupling (1; 50) comprising a first gear wheel (3; 53) which rotates with the winding shaft and which, while leaving the mechanical play (4), is in direct or indirect engagement with a second gear wheel (2; 52) which rotates with the drive shaft, **characterized in that** the at least one sensor (7; 8; 55; 56) is a Hall-Sensor, and that the first gear wheel (3; 53) is configured as a first incremental ring (59), which comprises first signal generators (6; 62) evenly distributed around a first rotational axis, said first incremental ring (59)is adapted to output periodic signals (12) correlated with the rotational movement of the first gear wheel (3; 53), and the second gear wheel (2; 52) is configured as a second incremental ring (58) which comprises second signal generators (5; 61) evenly distributed around a second rotational axis, said second incremental ring (58) is adapted to output periodic signals correlated with the rotational movement of the second gear wheel (2; 52), and a relative change in the local position or the temporal sequence of the signals (11; 12) of first and second signal generators (5; 6; 61; 62) being detectable by means of the at least one Hall-sensor (7; 8; 55; 56), und whereby the first signal generator (6; 62) serves as an incremental encoder for controlling the upward and downward movement of a hanging element, so that by a counting device an upper end position and a lower end position and intermediate positions of the hanging element may be determined, and the same evaluation and control device being adapted to be simultaneously used for controlling the standstill state and for position control and end-position switching-off of the hanging element.

2. The device according to claim 1, **characterized in that** the sensor (7, 8; 55; 56) comprises at least one magnetic field sensor, and that the first incremental ring (59) comprises magnetic zones evenly distributed around the first rotational axis, and that the second incremental ring (58) comprises magnetic zones evenly distributed around the second rotational axis.

3. The device according to claim 1 or 2, **characterized in that** the signal generators of the first and the second incremental ring (58; 59) are arranged in a joint circumferential area about a joint rotational axis.

4. The device according to any one of the preceding claims, **characterized in that** the incremental rings (58; 59) are configured as drivers, wherein front-face forms (2, 3a) of the one incremental ring (58) engage into corresponding front-face counter-forms of the other incremental ring (59) while leaving a play (4).

5. The device according to claim 2 and claim 4, **characterized in that** the magnetic zones are distributed around the incremental ring (57; 58) in conformity with the change of forms (2a; 3a) and counter-forms.

6. The device according to any one of claims 2 or 5, **characterized in that** the magnetic zones are formed by magnetic components that are evenly distributed around the circumference of the gear wheel (2; 3, 52; 53) and fixed thereonto.

7. The device according to any one of claims2, 5 and 6, characterized that the incremental rings consist of magnetic material, wherein the magnetic zones are each separated from one another by recesses of the incremental ring.

8. The device according to claim 7, **characterized in that** the incremental rings consist of magnetic plastic.

9. The device according to any one of claims 1 or 5 to 8, **characterized in that** the magnetic zones are each assigned to the area of the teeth (2a; 3a) of first and second gear wheel (2; 3).

10. The device according to any one of the preceding claims, **characterized in that** a spring element (60) is provided that produces a spring force directed against the exertion of the mechanical play (4) between first gear wheel (3) and second gear wheel (2).

11. The device according to any one of the preceding claims, **characterized in that** the sensor (7; 8; 55; 56) is configured as a difference Hall element with two sensor areas.

12. The device according to any one of the preceding claims, **characterized in that** the mechanical play (4) between first and second gear wheel (2; 3) is at least 5 angular degrees, preferably at least 10 angular degrees.

## Revendications

1. Dispositif pour la commande d'arrêt d'un dispositif d'entraînement motorisé d'un volet, d'une marquise, d'une porte de garage et similaires avec un arbre d'enroulement qui est relié par un accouplement à engrenage (1; 50) d'un arbre moteur d'un moteur électrique en laissant un jeu mécanique (4), avec au moins un capteur (7; 8; 61; 62) pour saisir un critère d'arrêt ainsi qu'un dispositif de commande et d'analyse, au moyen duquel l'alimentation électrique pour le moteur électrique est activable en fonction de signaux de sortie du capteur (7; 8; 55; 56), l'accouplement à engrenages (1; 50) comprenant une première roue dentée (3; 53), qui tourne avec l'arbre d'enroulement et qui est en prise directe ou indirecte avec une seconde roue dentée (2; 52) - en laissant le jeu mécanique (4) -, seconde roue dentée qui tourne avec l'arbre moteur, **caractérisé en ce que** au moins un capteur (7; 8; 55; 56) est conçu comme un capteur Hall et **en ce que** la première roue dentée (3; 53) est conçue comme une bague incrémentale (59) qui présente des premiers émetteurs de signaux (6; 62) répartis régulièrement autour d'un premier axe de rotation et qui sont appropriés pour la délivrance de signaux périodiques (12) en corrélation avec la rotation de la première roue dentée (3; 53), et la seconde roue dentée (2; 52) étant conçue comme seconde bague incrémentale (58) qui présente des seconds émetteurs de signaux (5; 61) répartis régulièrement autour d'un second axe de rotation qui sont appropriés pour la délivrance de signaux périodiques en corrélation avec le mouvement de rotation de la seconde roue dentée (2; 52) et au moyen d'au moins un capteur à effet Hall (7; 8; 55; 56), une modification relative de la position locale ou de la suite temporelle des signaux (11; 12) étant détectable par les premiers et seconds émetteurs de signaux (5; 6; 61; 62), et le premier émetteur de signaux (6; 62) pouvant être utilisé en même temps comme émetteur incrémental pour la commande du mouvement vers le haut et vers le bas d'un volet de sorte qu'au moyen d'un compteur, la position de fin de course supérieure et inférieure et les positions intermédiaires du volet puissent être saisies et le même dispositif d'analyse et de commande étant utilisable en même temps pour la commande d'arrêt et une commande de position et de désactivation de fin de course du volet..

2. Dispositif selon la revendication 1, **caractérisé en ce que** le capteur (7; 8; 55;56) comprend au moins un capteur de champ magnétique et **en ce que** la première bague incrémentale (59) présente des zones magnétiques réparties régulièrement autour du premier axe de rotation et **en ce que** la seconde bague incrémentale (58) présente des zones magnétiques réparties régulièrement autour du second axe de rotation.

3. Dispositif selon la revendication 1 ou 2, **caractérisé en ce que** les émetteurs de signaux de la première et seconde bague incrémentale (58; 59) sont disposés dans une surface périphérique commune autour d'un axe de rotation commun.

4. Dispositif selon l'une des revendications précédentes, **caractérisé en ce que** les bagues incrémentales (58; 59) sont réalisées comme des entraîneurs, des évidements (2a; 3a) d'une bague incrémentale (58) s'engageant dans des évidements opposés correspondants frontaux de l'autre bague incrémentale (59) - en laissant un jeu (4).

5. Dispositif selon la revendication 2 et la revendication 4, **caractérisé en ce que** les zones magnétiques sont réparties autour de la bague incrémentale (57; 58) en fonction d'une alternance d'évidements (2a; 3a) et d'évidements antagonistes.

6. Dispositif selon l'une des revendications 2 ou 5, **caractérisé en ce que** les zones magnétiques sont formées par des composants magnétiques qui sont répartis et fixés régulièrement autour de la périphérie de la roue dentée (2; 3; 52; 53).

7. Dispositif selon l'une des revendications 2, 5 et 6, **caractérisé en ce que** les bagues incrémentales se composent de matériau magnétique, les zones magnétiques étant séparées les unes des autres par des évidements de la bague incrémentale.

8. Dispositif selon la revendication 7, **caractérisé en ce que** les bagues incrémentales se composent de matière plastique magnétique.

9. Dispositif selon l'une des revendications 1 ou 5 à 8, **caractérisé en ce que** les zones magnétiques sont associées respectivement à la zone de denture (2a; 3a) de la première et seconde roue dentée (2; 3).

10. Dispositif selon l'une des revendications précédentes, **caractérisé en ce qu'**il est prévu un élément ressort (60) qui génère une force de ressort appliquée entre la première roue dentée (3) et la seconde roue dentée (2) dirigée à l'encontre de l'application du jeu mécanique (4).

11. Dispositif selon l'une des revendications précédentes, **caractérisé en ce que** le capteur (7; 8; 55; 56) est réalisé comme élément différentiel à effet Hall avec deux zones de capteurs.

12. Dispositif selon l'une des revendications précédentes, **caractérisé en ce que** le jeu mécanique (4) entre la première et la seconde roue dentée (2; 3) s'élève à au moins 5 degrés, de préférence au moins 10 degrés angulaires.
